# EUROPÄISCHE PATENTSCHRIFT

(11) **EP 1 133 414 B1**
(45) Veröffentlichungstag und Bekanntmachung des Hinweises auf die Patenterteilung: **29.10.2003**
(21) Anmeldenummer: 00963934.5
(22) Anmeldetag: 29.08.2000
(51) Int. Cl.: B60R 21/01, B60R 16/02

(54) **VERFAHREN ZUR DATENÜBERTRAGUNG ZWISCHEN EINEM STEUERGERÄT FÜR RÜCKHALTEEINRICHTUNGEN UND SENSOREN**
METHOD FOR THE TRANSMISSION OF DATA BETWEEN A CONTROL UNIT FOR RESTRAINT DEVICES AND SENSORS
PROCEDE DE TRANSMISSION DE DONNEES ENTRE UN APPAREIL DE COMMANDE DE DISPOSITIFS DE RETENUE ET DES CAPTEURS

(30) Priorität: 23.09.1999 DE 19945614
(43) Veröffentlichungstag der Anmeldung: 19.09.2001
(73) Patentinhaber: ROBERT BOSCH GMBH, 70442 Stuttgart (DE); TEMIC TELEFUNKEN microelectronic GmbH, 74072 Heilbronn (DE)
(72) Erfinder: NITSCHKE, Werner, 71254 Ditzingen (DE); HUBER, Thomas, 71717 Beilstein (DE); SCHAEDLER, Peter, 71636 Ludwigsburg (DE); BISCHOFF, Michael, 85111 Adelschlag (DE); DEPPE, Ruediger, 85049 Ingolstadt (DE); FENDT, Guenter, 86529 Schrobenhausen (DE); MUELLER, Norbert, 86529 Schrobenhausen (DE); RINKENS, Johannes, 85055 Ingolstadt (DE); SCHAEFFER, Stefan, 86529 Schrobenhausen (DE); STEINER, Werner, 86529 Schrobenhausen (DE)
(86) Internationale Anmeldenummer: DE0002948
(87) Internationale Veröffentlichungsnummer: WO01021447

(56) Entgegenhaltungen:
- WO-A-89/09146
- WO-A-98/09844
- DE-A- 19 963 267
- US-A- 5 899 949
- LAWRENZ W: "AUTO-BUSSE FUER SENSOR-AKTOR-VERNETZUNG" RADIO FERNSEHEN ELEKTRONIK,DE,VEB VERLAG TECHNIK. BERLIN, Bd. 40, Nr. 10, 1991, Seiten 584-589, XP000265285 ISSN: 1436-1574

## Beschreibung

Die Erfindung betrifft ein Verfahren zur Datenübertragung zwischen einem Steuergerät für Rückhalteeinrichtungen und Sensoren.

### Stand der Technik

Die Leistungsfähigkeit der Rückhaltesysteme in Fahrzeugen wird künftig stark zunehmen, um den Schutz der Fahrzeuginsassen weiter zu verbessern. Das bedeutet, daß die Zahl der Rückhalteeinrichtungen im Fahrzeug größer wird. Zu diesen Rückhalteeinrichtungen gehören dann z.B. mehrstufig zündbare Airbags für Fahrer und Beifahrer, Kniebags für Fahrer und Beifahrer, Seitenairbags für Fahrer, Beifahrer und Fond-Insassen, wobei Seitenairbags sowohl für den Kopf als auch für den Thoraxbereich vorgesehen werden. Außerdem gehören zu den Rückhalteeinrichtungen Gurtstraffer, die auch mehrstufig aktivierbar sind, Überrollbügel usw. Es wird also für jeden Fahrzeuginsassen ein komplexes Schutzsystem, das aus mehreren Rückhalteeinrichtungen besteht, im Fahrzeug installiert sein. Um all diese Rückhalteeinrichtungen so anzusteuern, daß sie dem Fahrzeuginsassen einen wirksamen Schutz bieten, bedarf es einer Vielzahl von Sensoren, welche unfallspezifische Fahrzeugparameter erfassen. Dazu gehören Sensoren, welche die Fahrzeugbeschleunigung in verschiedene Richtungen an verschiedenen Orten des Fahrzeugs erfassen, Precrashsensoren, Drehratensensoren, Sensoren, die den Fahrzeuginnenraum überwachen, um die Art der Sitzbelegung, die Position der Fahrzeuginsassen, Kindersitze usw. zu erfassen. Ein im Fahrzeug vorhandenes Steuergerät, das die Auslösung der einzelnen Rückhalteeinrichtungen steuert, ist mit all den Sensoren verbunden, um deren Signale auszuwerten. Durch Einführung eines Bussystems, das alle Sensoren und das Steuergerät miteinander vernetzt, können voluminöse Kabelbäume eingespart werden. Ein solches Bussystem für eine Vielzahl von Sensoren, wie es einleitend dargelegt worden ist, ist z.B. aus der EP 0 407 391 B1 (WO 89/09146 A1) bekannt. Gemäß diesem Stand der Technik stellt das Steuergerät, bevor eine Datenübertragung zwischen ihm und den einzelnen Sensoren stattfindet, die Anzahl und Typen der vorhandenen funktionsfähigen Sensoren fest und teilt jedem festgestellten Sensor eine fortlaufende Nummer zu. Diese fortlaufende Nummer bestimmt die Reihenfolge der Kommunikation der Sensoren mit dem Steuergerät. Während der Kommunikation des Steuergeräts mit den Sensoren senden alle Sensoren immer in der gleichen zeitlichen Reihenfolge gemäß ihrer zugeordneten Nummer in fest vorgegebenen Zeitschlitzen.

Der Erfindung liegt die Aufgabe zugrunde, ein Verfahren der eingangs genannten Art anzugeben, mit dem ein flexibler zeitlicher Zugriff vom Steuergerät auf die Meßdaten der einzelnen Sensoren möglich ist.

### Vorteile der Erfindung

Die genannte Aufgabe wird mit den Merkmalen des Anspruchs 1 dadurch gelöst, daß das Steuergerät ein Anforderungstelegramm an die Sensoren aussendet und daß jeder Sensor aus dem Vergleich des Anforderungstelegramms mit seiner eigenen Adresse ableitet, ob und in welchem Zeitschlitz er seine Daten an das Steuergerät übertragen soll. Damit können den einzelnen Sensoren für die Übertragung ihrer Meßdaten zum Steuergerät flexibel Zeitschlitze zugeordnet werden. D.h., es können die Prioritäten der einzelnen Sensoren an unterschiedliche Fahrzeugtypen oder Unfallszenarien angepaßt werden.

Vorteilhafte Ausführungen der Erfindung gehen aus den Unteransprüchen hervor.

So kann vorgesehen werden, daß sich für die Sensoren aus der Übereinstimmung zumindest eines Teils ihrer aus mehreren Bits bestehenden Adressen mit zumindest einem Teil des aus mehreren Bits bestehenden Anforderungstelegramms ergibt, ob der betreffende Sensor in einem festen Zeitraster ständig seine Daten aussende soll, oder ob er einmalig in einem durch das Anforderungstelegramm gekennzeichneten Zeitschlitz seine Daten aussenden soll. Es können auch mit einem Anforderungstelegramm, von dem ein Teil mit einem Teil der Adressen mehrerer Sensoren übereinstimmt, diesen mehreren Sensoren Zeitschlitze zugewiesen werden.

Es ist zweckmäßig, daß Sensoren, deren aufgenommene Meßwerte mit möglichst geringer Zeitverzögerung vom Steuergerät verarbeitet werden sollen, ihre Daten in Zeitschlitzen übertragen, die am Ende der Zeitschlitzfolge liegen.

Vorteilhafter Weise überträgt das Steuergerät zusammen mit dem Anforderungstelegramm mehrere Kontrollbits über die Busleitung, welche den vom Anforderungstelegramm angesprochenen Sensoren mitteilen, daß sie entweder ein bestimmtes von mehreren in ihnen vorhandenen Speicherregistern auswählen sollen, damit darin eine Information eingeschrieben und ausgelesen werden kann, oder daß in das ausgewählte Speicherregister Informationen eingeschrieben werden sollen, oder daß aus dem ausgewählten Speicherregister eine Information ausgelesen werden soll, oder daß Meßdaten zum Steuergerät gesendet werden sollen.

### Zeichnung

Die Erfindung wird nun anhand von Ausführungsbeispielen näher beschrieben. Es zeigen:
Figur 1 ein Blockschaltbild von einem Steuergerät und mehreren daran über eine Busleitung angeschlossenen Sensoren,
Figur 2 einen Datenrahmen zur Auswahl von Registern und Einschreiben von Information in die ausgewählten Register eines ausgewählten Sensors,
Figur 3 einen Datenrahmen zum Auslesen von Informationen aus einem ausgewählten Register eines bestimmten Sensors und
Figur 4 einen Datenrahmen zur Übertragung von Meßdaten von mehreren Sensoren.

### Beschreibung von Ausführungsbeispielen

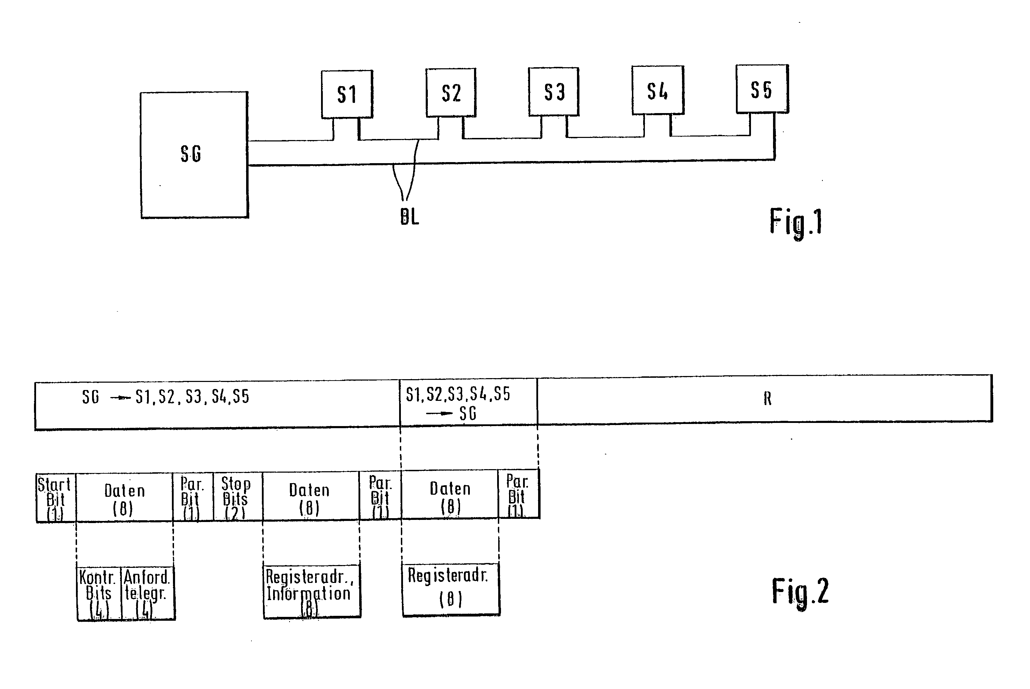

Das Blockschaltbild in Figur 1 zeigt ein Steuergerät SG, das mit Hilfe eines Algorithmus die Auslösung von mehreren nicht dargestellten, in einem Fahrzeug angeordneten Rückhalteeinrichtungen steuert. Zu diesen Rückhalteeinrichtungen können verschiedenartige Airbags, die an unterschiedlichen Orten im Fahrzeug installiert sind, oder Gurtstraffer oder Überrollbügel oder andere Insassenschutzeinrichtungen gehören. Zur Bestimmung der Auslösekriterien für die einzelnen Rückhalteeinrichtungen benötigt das Steuergerät SG Meßdaten von mehreren Sensoren S1, S2, S3, S4, S5, welche unfallspezifische Fahrzeugparameter erfassen. Solche Sensoren, von denen in der Figur 1 beispielhaft fünf dargestellt sind, sind z.B. Beschleunigungssensoren, die entweder zentral im Fahrzeug oder im Seiten-, im Front- oder im Heckbereich des Fahrzeugs angeordnet sind, oder Precrash-Sensoren oder Drehratensensoren zur Erfassung eines Überrollvorgangs oder Geschwindigkeitssensoren oder Sensoren zur Überwachung des Innenraums, um die Art der Sitzbelegung bzw. die Sitzpositionen von Fahrzeuginsassen ermitteln zu können. Im Prinzip gehören alle Arten von Sensoren dazu, mit denen die Art und Schwere eines Fahrzeugcrashes und auch die Sitzbelegung im Fahrzeug und die Positionen von Fahrzeuginsassen erfaßt werden können, um aus deren Meßdaten die vorhandenen Rückhalteeinrichtungen so ansteuern zu können, daß den Insassen ein optimaler Schutz zukommt.

Wie die Figur 1 zeigt, sind alle Sensoren S1 bis S5 über eine Busleitung BL an das Steuergerät SG angeschlossen. Die Busleitung BL kann eine serielle, eine ringförmige, eine sternförmige oder baumförmige Struktur aufweisen. Wie nun ein Datenaustausch zwischen dem Steuergerät SG und den einzelnen Sensoren S1 bis S5 über die Busleitung BL erfolgt, wird anhand der in den Figuren 2 bis 4 dargestellten Datenrahmen erläutert.

Jeder Sensor S1 bis S5 weist eine Reihe von Speicherregistern auf, von denen jedem eine Registeradresse zugewiesen ist. Es gibt Speicherregister, z.B. ein ROM-Register, PROM-Register oder RAM-Register, in dem die Sensoradresse abgespeichert ist, andere Speicherregister, in denen eine Information über die Sensorart, das Fertigungsdatum des betreffenden Sensors, die Chargennummer des Sensors, herstellerspezifische Daten des Sensors, die ASIC-Version des Sensors und herstellerspezifische Parameter für die Meßsignalauswertung abgespeichert sind. Außerdem können Speicherregister vorgesehen werden, in denen Vorgaben für die Meßdatenauflösung abgespeichert werden können, und noch andere Speicherregister zur Aufnahme anderer Informationen, welche für den Betrieb der Rückhaltesysteme von Bedeutung sind. In manche Speicherregister werden vom Steuergerät SG aus Informationen eingeschrieben und aus anderen Speicherregistern werden die darin abgelegten Informationen vom Steuergerät SG gelesen.

Die Figur 2 zeigt die Struktur eines Datenrahmens für den Fall, daß das Steuergerät SG ein bestimmtes Speicherregister in einem Sensor auswählt und in dieses ausgewählte Speicherregister eine Information einschreibt. Der Datenrahmen besitzt einen ersten Teil, in dem das Steuergerät SG an einen der hier z.B. fünf Sensoren, S1, S2, S3, S4, S5 die Nachricht überträgt, daß in diesem speziellen Sensor ein ganz bestimmtes Speicherregister ausgewählt werden soll. In einem zweiten Teil des Datenrahmens bestätigt dieser Sensor die Auswahl dieses Speicherregisters. Da jeder Datenrahmen, der für die Kommunikation zwischen dem Steuergerät und den Sensoren S1 bis S5 verwendet wird, die gleiche Länge aufweist, wird der restliche Teil R des Datenrahmens, der nicht für eine Datenübertragung vom Steuergerät SG zu den Sensoren S1 bis S5 bzw. von den Sensoren S1 bis S5 an das Steuergerät SG benötigt wird, mit Stop-Bits aufgefüllt, die den Bit-Takt aufrechterhalten.

Derjenige Teil des Datenrahmens, in dem das Steuergerät SG seine Information an einen der Sensoren S1 bis S5 überträgt, beginnt mit einem Startbit. Darauf folgen acht Datenbits, daran schließen sich ein Parity-Bit und zwei Stop-Bits an, und schließlich folgen noch weitere acht Datenbits und zum Schluß ein Parity-Bit. Die ersten acht Datenbits setzen sich zusammen aus vier Kontrollbits und einem aus vier Bits bestehenden Anforderungstelegramm. Über die vier Kontrollbits wird dem angesprochenen Sensor S1 bis S5 die Art der übertragenen Information mitgeteilt, ob der betreffende Sensor ein bestimmtes Speicherregister auswählen soll, oder ob in ein ausgewähltes Speicherregister eine Information eingeschrieben oder daraus ausgelesen werden soll oder ob der Sensor Meßdaten zum Steuergerät SG übertragen soll. Das aus vier Bits bestehende Anforderungstelegramm gibt die Adresse des ausgewählten Sensors wieder. In dem zweiten aus acht Bits bestehenden Datenblock befindet sich, wenn bei dem betreffenden Sensor ein bestimmtes Speicherregister ausgewählt werden soll, die Adresse dieses Speicherregisters. Falls in ein zuvor ausgewähltes Speicherregister eine Information eingeschrieben werden soll, befindet sich in diesem zweiten Datenblock die einzuschreibende Information. Zur Bestätigung, daß ein Speicherregister in dem betreffenden Sensor ausgwählt worden ist bzw. daß eine Information in dieses Speicherregister eingeschrieben worden ist, sendet der betreffende Sensor einen aus acht Bit bestehenden Datenblock mit einem daran anschließenden Parity-Bit an das Steuergerät SG zurück. In diesem Datenblock befindet sich die Adresse des ausgewählten Speicherregisters.

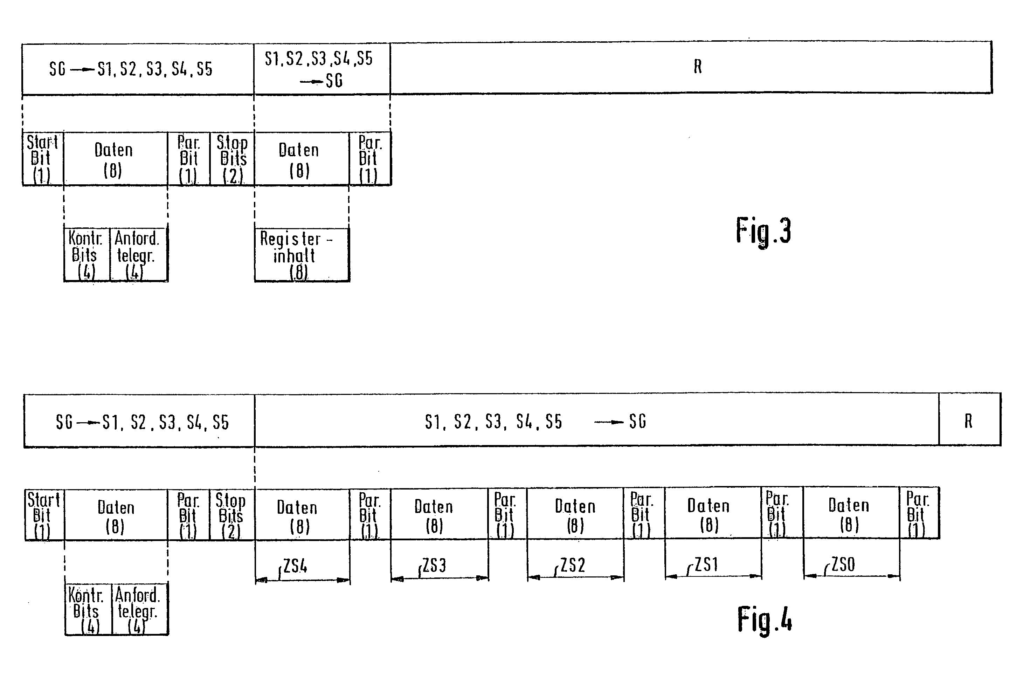

In der Figur 3 ist die Struktur des Datenrahmens dargestellt für den Fall, daß das Steuergerät SG aus einem zuvor ausgewählten Speicherregister eines bestimmten Sensors S1 bis S5 eine Information auslesen will. Dann beginnt der Teil des Datenrahmens, der vom Steuergerät SG an einen Sensor S1 bis S5 übertragen wird, mit einem Startbit, dem ein Datenblock von 8 Bits, ein Parity-Bit und zwei Stop-Bits folgen. Der Datenblock besteht wieder aus 4 Kontroll-Bits und einem Anforderungstelgeramm mit 4 Bits. Die Kontroll-Bits teilen dem Sensor mit, daß aus einem ausgewählten Speicherregister die Information ausgelesen werden soll. Das aus 4 Bits bestehende Anforderungstelegramm enthält die Adresse des angesprochenen Sensors. Nachdem dieser Sensor den Inhalt des ausgewählten Speicherregisters ausgelesen hat, überträgt er ihn in einem Datenblock mit 8 Bits an das Steuergerät SG. Wie üblich folgt dem Datenblock ein Parity-Bit.

Ein für die Übertragung von Meßdaten von den Sensoren S1 bis S5 an das Steuergerät SG zuständiger Datenrahmen ist in der Figur 4 dargestellt. Derjenige Teil des Datenrahmens, in dem das Steuergerät SG ein oder mehrere Senoren S1 bis S5 auffordert, ihre Meßdaten zu übertragen, beginnt mit einem Scartbit, dem ein Datenblock von 8 Bits, ein Parity-Bit und zwei Stop-Bits folgen. Der Datenblock setzt sich zusammen aus 4 Kontroll-Bits und 4 Bits für ein Anforderungstelegramm. Die Kontrollbits informieren die Sensoren S1 bis S5 darüber, daß Meßdaten an das Steuergerät SG zu übertragen sind. Das Anforderungstelegramm teilt den einzelnen Sensoren S1 bis S5 mit, welcher der Sensoren in welchem Zeitschlitz ZS0, ZS1, ZS2, ZS3, ZS4 seine Meßdaten zum Steuergerät SG übertragen soll.

Der Bereich des Datenrahmens, in dem die Sensoren S1 bis S5 ihre Meßdaten an das Steuergerät SG aussenden, ist in dem dargestellten Ausführungsbeispiel in fünf Zeitschlitze ZS0 bis ZS4 eingeteilt. Mit Hilfe der anschließenden zwei Tabellen soll verdeutlicht werden, wie die Meßdaten (bestehend aus 8 Bits mit jeweils einem Parity-Bit) der einzelnen Sensoren S1 bis S5 auf die vorhandenen Zeitschlitze ZS0 bis ZS4 aufgeteilt werden können. Die beiden Tabellen bestehen aus fünf Spalten, wobei in der ersten Spalte die Sensoren durchnumeriert sind. Die beiden Tabellen gehen beispielsweise von zwölf Sensoren aus. In der zweiten Spalte der Tabellen sind die aus 4 Bits a0, a1, a2 und a3 bestehenden Adressen der Sensoren angegeben. In der darauffolgenden Spalte befinden sich mögliche Ausführungen des aus 4 Bits A0, A1, A2 und A3 bestehenden vom Steuergerät SG ausgesendeten Antworttelegramms. In einer weiteren Spalte sind die Zeitschlitze angegeben, in denen die einzelnen Sensoren ihre Meßdaten an das Steuergerät übertragen. In der letzten Spalte der beiden Tabellen ist der Sendemodus für die Sensoren S1 bis S5 charakterisiert.

**Tabelle 1**

| **Sensor Nr.** | **Sensoradresse a3...a0** | **Anforderungstelegramm A3...A0** | **Zeitschlitz** | **Sendemodus** |
|---|---|---|---|---|
| - | 0000 | - | - | Reserviert |
| - | 0001 | - | - | Reserviert |
| - | 0010 | - | - | Reserviert |
| - | 0011 | - | - | Reserviert |
| 1 | 0100 | 0xxx | ZS0 | Sendet ständig |
| 2 | 0101 | 0xxx | ZS1 | Sendet ständig |
| 3 | 0110 | 0xxx | ZS2 | Sendet ständig |
| 4 | 0111 | 0xxx | ZS3 | Sendet ständig |
| 5 | 1000 | 1000 | ZS4 | Sendet auf Anforderung |
| 6 | 1001 | 1001 | ZS4 | Sendet auf Anforderung |
| 7 | 1010 | 1010 | ZS4 | Sendet auf Anforderung |
| 8 | 1011 | 1011 | ZS4 | Sendet auf Anforderung |
| 9 | 1100 | 1100 | ZS4 | Sendet auf Anforderung |
| 10 | 1101 | 1101 | ZS4 | Sendet auf Anforderung |
| 11 | 1110 | 1110 | ZS4 | Sendet auf Anforderung |
| 12 | 1111 | 1111 | ZS4 | Sendet auf Anforderung |

**Tabelle 2**

| **Sensor Nr.** | **Sensoradresse A3...a0** | **Anforderungstelegramm A3...A0** | **Zeitschlitz** | **Sendemodus** |
|---|---|---|---|---|
| - | 0000 | - | - | Reserviert |
| - | 0001 | - | - | Reserviert |
| - | 0010 | - | - | Reserviert |
| - | 0011 | - | - | Reserviert |
| 1 | 0100 | 01xx | ZS0 | Sendet auf Anforderung |
| 2 | 0101 | 01xx | ZS1 | Sendet auf Anforderung |
| 3 | 0110 | 01xx | ZS2 | Sendet auf Anforderung |
| 4 | 0111 | 01xx | ZS3 | Sendet auf Anforderung |
| 5 | 1000 | 10xx | ZS0 | Sendet auf Anforderung |
| 6 | 1001 | 10xx | ZS1 | Sendet auf Anforderung |
| 7 | 1010 | 10xx | ZS2 | Sendet auf Anforderung |
| 8 | 1011 | 10xx | ZS3 | Sendet auf Anforderung |
| 9 | 1100 | xx00 | ZS4 | Sendet auf Anforderung |
| 10 | 1101 | xx01 | ZS4 | Sendet auf Anforderung |
| 11 | 1110 | xx10 | ZS4 | Sendet auf Anforderung |
| 12 | 1111 | xx11 | ZS4 | Sendet auf Anforderung |

Wie den beiden Tabellen zu entnehmen ist, sind die ersten 4 Adressen a0 bis a3 keinen bestimmten Sensoren zugeordnet. Diese vier Adressen sind für andere Maßnahmen reserviert (z.B. zur Initialisierung aller Sensoren im Fahrzeug) als für die Meßdatenübertragung der einzelnen Sensoren S1 bis S5 zum Steuergerät SG.

Bei dem in der Tabelle 1 dargestellten Ausführungsbeispiel werden von einem Anforderungstelegramm, dessen Bit A3 eine 0 ist, alle diejenigen Sensoren 1, 2, 3 und 4, deren Adresse mit dem Bit a3 = 0 beginnt, aufgefordert, in den Zeitschlitzen ZS0, ZS1, ZS2 und ZS3 ihre Meßdaten ständig zu senden, z.B. in einem periodisch sich wiederholenden Zeitzyklus von 250 µs. Die mit x gekennzeichneten Bits A2, A1 und A0 im Anforderungstelegramm haben für die genannten Sensoren mit den Nummern 1, 2, 3 und 4 keine Bedeutung. Diese Sensoren reagieren mit einer Meßdatenübertragung, weil das höchstwertige Bit a3 ihrer Adresse wie das höchstwertige Bit A3 des Anforderungstelegramms eine 0 aufweist. Die anderen Sensoren mit den Nummern 5 bis 12 werden individuell vom Anforderungstelegramm angesprochen und damit aufgefordert ihre Meßdaten im Zeitschlitz ZS4 zu senden. Es ist jeweils derjenige Sensor angesprochen, dessen Sensoradresse mit dem Anforderungstelegramm in allen Bits übereinstimmt. Gemäß der Zeitschlitzzuteilung auf die Sensoren gibt es also eine Gruppe (Sensoren 1 bis 5), die ständig in für sie reservierten Zeitschlitzen ZS0, ZS1, ZS2 und ZS3 ihre Meßdaten aussenden, weil deren Meßdaten die höchste Priorität für die Auslöseentscheidung aufweisen. Und es gibt eine weitere Gruppe von Sensoren 5 bis 12, von denen immer nur einer ausgewählt wird zur Übertragung seiner Meßdaten im Zeitschlitz ZS4.

Eine andere Variante für die zeitliche Zuordnung der Sensoren zu den einzelnen Zeitschlitzen zeigt die Tabelle 2. Sind die zwei höchstwertigen Bits A3 und A2 des vom Steuergerät SG an die Sensoren ausgesendeten Anforderungstelegramms auf 0 und 1 gesetzt, so werden dadurch alle Sensoren mit denjenigen Sensoradressen angesprochen, deren höchstwertige Bits a3 und a2 ebenfalls auf 0 und 1 gesetz sind. Die Sensoren mit diesen Adressen senden dann in ihnen fest zugeordneten Zeitschlitzen ZS0, ZS1, ZS2 und ZS3. Eine weitere Gruppe von Sensoren, und zwar diejenigen, deren höchstwertige Adressen-Bits a3 und a2 auf 1 und 0 gesetzt sind, werden durch ein Anforderungstelegramm des Steuergeräts SG angesprochen, dessen höchstwertige Bits A3 und A2 auf dieselben Werte 1 und 0 gesetzt sind. Wie schon die einzelnen Sensoren der ersten Gruppe sind auch die einzelnen Sensoren der zweiten Gruppe den festen Zeitschlitzen ZS0, ZS1, ZS2 und ZS3 zugeordnet. Weitere Sensoren werden über das Anforderungstelegramm nicht wie zuvor gruppenweise sondern einzeln aufgefordert, im Zeitschlitz ZS4 ihre Meßdaten zum Steuergerät SG zu übertragen. Es sind dies die Sensoren, deren Adressen in den niederwertigen Bits a1 und a0 die Werte 00, 01, 10 oder 11 aufweisen. Es ist jeweils derjenige Sensor für die Übertragung seiner Meßdaten aufgefordert, dessen Adressen-Bits a1, a0 mit den niederwertigen Bits A1 und A0 des Anforderungstelegramms übereinstimmen.

Würde beispielsweise das vom Steuergerät SG ausgesendete Anforderungstelegramm die Bit-Konfiguration 1011 aufweisen, so würden einerseits sämtliche Sensoren, deren höchstwertige Adressenbits a3 und a2 die Werte 10 aufweisen, in den Zeitschlitzen ZS0, ZS1, ZS2 und ZS3 ihre Meßdaten senden und außerdem der Sensor mit der Sensoradresse 11 im Zeitschlitz ZS4 seine Meßdaten an das Steuergerät SG übertragen. Die im Anforderungstelegramm mit x gekennzeichneten Bits werden von den Sensoren ignoriert.

Es zeigt sich also, daß über das Anforderungstelegramm des Steuergeräts SG eine sehr flexible Zuteilung der Sensoren zu den einzelnen Zeitschlitzen möglich ist. Abweichend von den in den Tabellen 1 und 2 dargestellten Varianten für die Zuordnung der Sensoren auf die zur Verfügung stehenden Zeitschlitze sind natürlich noch viele andere Varianten möglich.

Es ist zweckmäßig, daß Sensoren, deren Meßwerte mit möglichst geringer Zeitverzögerung vom Steuergerät verarbeitet werden sollen, ihre Daten in Zeitschlitzen übertragen, die am Ende der Zeitschlitzfolge liegen. Dafür kommen in den zuvor beschriebenen Ausführungsbeispielen z.B. die Zeitschlitze ZS0 und ZS1 in Frage. Da, wie man der Figur entnehmen kann, diese Zeitschlitze innerhalb des Datenrahmens zuletzt in die Busleitung eingekoppelt werden, ist die Zeit zwischen der Meßwerterfassung der Sensoren und der Meßwertverarbeitung des Steuergeräts am geringsten. Man wird deshalb gerade solche Sensoren diesen Zeitschlitzen, die eine hohe Meßwertaktualität garantieren, zuordnen, deren zeitliche Aktualität für die Auslösung von Rückhalteeinrichtungen besonders wichtig ist. Dies trifft insbesondere auf Beschleunigungssensoren zu, die im seitlichen Bereich des Fahrzeugs angeordnet sind, weil bekanntermaßen für Seitencrashes die Zeitverzögerung zwischen der Meßsignalerfassung und der Auslösung der Rückhalteeinrichtungen extrem gering sein muß.

Die oben beschriebenen Datenrahmen weisen einen festen Zeittakt auf. Das ermöglicht es, daß die einzelnen Sensoren S1,... S5, welche auf den Zeittakt synchronisiert sind, auf Zeitschlitze zugreifen, die nicht allein ihnen selbst zugeordnet sind, sondern auch auf Zeitschlitze ZS0, ... ZS4, in denen andere Sensoren ihre Informationen übertragen. Damit können Sensoren untereinander Nachrichten austauschen. So können sich z.B. baugleiche Sensoren gegenseitig abgleichen; z.B. stellen sich gleichartige Beschleunigungssensoren auf einen gemeinsamen Grundwert oder Offset ein. In einem anderen Beispiel können Sensoren zur Fahrzeuginnenraumüberwachung, welche die Art der Sitzbelegung und die Position der Fahrzeuginsassen erfassen, von einem statischen Meßmodus auf einen dynamischen Meßmodus umschalten, wenn sie von anderen Sensoren Informationen über einen bevorstehenden Crash erhalten. Während im statischen Meßmodus, wenn sich das Fahrzeug in einem unkritischen Zustand befindet, der Meßzyklus groß (ca. 100µs) ist, ist im dynamischen Meßmodus, wenn sich eine Crashsituation anbahnt, der Meßzyklus viel kleiner (ca. 10µs). Denn die Entscheidung, ob im Crashfall die Airbags hart oder weich aufgeblasen oder gar nicht aktiviert werden sollen, hängt entscheidend von der Position der Fahrzeuginsassen relativ zu den Airbags ab. Da sich aber vor einem Crash die Position der Insassen sehr schnell ändern kann, ist ein kurzer Meßzyklus, entsprechen dem dynamischen Meßmodus, unabdingbar.

## Patentansprüche

1. Verfahren zur Datenübertragung zwischen einem Steuergerät (SG) für Rückhalteeinrichtungen und damit über eine Busleitung (BL) verbundenen Sensoren (S1, ..., S5) zur Erfassung unfallspezifischer Fahrzeugparameter, wobei jedem Sensor (S1,..., S5) eine Adresse (a3, ..., a0) zugeordnet ist, über die er vom Steuergerät (SG) identifiziert werden kann, und jeder Sensor (S1, ..., S5) in einem vorgegebenen Zeitschlitz (ZS0, ..., ZS4) seine Daten über die Busleitung (BL) an das Steuergerät (SG) überträgt, **dadurch gekennzeichnet, daß** das Steuergerät (SG) ein Anforderungstelegramm (A3, ..., A0) an die Sensoren (S1, ..., S5) aussendet und daß jeder Sensor (S1, ..., S5) aus dem Vergleich des Anforderungstelegramms (A3, ..., A0) mit seiner eigenen Adresse (a3, ..., a0) ableitet, ob und in welchem Zeitschlitz (ZS0, ..., ZS4) er seine Daten an das Steuergerät (SG) übertragen soll.

2. Verfahren nach Anspruch 1, **dadurch gekennzeichnet, daß** sich für die Sensoren (S1, ..., S5) aus der Übereinstimmung zumindest eines Teils seiner aus mehreren Bits (a3, ..., a0) bestehenden Adresse mit zumindest einem Teil des aus mehreren Bits (A3, ..., A0) bestehenden Anforderungstelegramms ergibt, ob der betreffende Sensor (S1, ..., S5) in einem festen Zeitraster (ZS0, ..., ZS4) ständig seine Daten aussenden soll, oder ob er einmalig in einem durch das Anforderungstelegramm gekennzeichneten Zeitschlitz (ZS0, ..., ZS4) seine Daten aussenden soll.

3. Verfahren nach Anspruch 2, **dadurch gekennzeichnet, daß** mit einem Anforderungstelegramm (A3, ..., A0), von dem ein Teil mit einem Teil der Adressen (a3, ..., a0) mehrerer Sensoren (S1, ..., S5) übereinstimmt, diesen mehreren Sensoren Zeitschlitze (ZS0, ..., ZS4) zugewiesen werden.

4. Verfahren nach einem der vorhergehenden Ansprüche, **dadurch gekennzeichnet, daß** Sensoren (S1, ..., S5), deren aufgenommene Meßwerte mit möglichst geringer Zeitverzögerung vom Steuergerät (SG) verarbeitet werden sollen, ihre Daten in Zeitschlitzen (ZS0, ZS1) übertragen, die am Ende der Zeitschlitzfolge (ZS0, ..., ZS4) liegen.

5. Verfahren nach Anspruch 1, **dadurch gekennzeichnet, daß** das Steuergerät (SG) zusammen mit dem Anforderungstelegramm (A3, ..., A0) mehrere Kontrollbits über die Busleitung (BL) überträgt, welche den vom Anforderungstelegramm (A3, ..., A0) angesprochenen Sensoren (S1, ..., S5) mitteilen, daß sie entweder ein bestimmtes von mehreren in ihnen vorhandenen Speicherregistern auswählen sollen, damit darin eine Information eingeschrieben oder ausgelesen werden kann, oder daß in das ausgewählte Speicherregister Informationen eingeschrieben werden sollen, oder daß aus dem ausgewählten Speicherregister eine Information ausgelesen werden soll, oder daß Meßdaten zum Steuergerät (SG) gesendet werden sollen.

6. Verfahren nach einem der vorhergehenden Ansprüche, **dadurch gekennzeichnet, daß** Sensoren (S1, ... S5) untereinander Informationen austauschen, indem von den miteinander kommunizierenden Sensoren (S1, ... S5) jeder Sensor auf den (die) zu dem (den) anderen Sensor(en) gehörenden Zeitschlitz(en) (ZS0, ..., ZS4) im Datenrahmen zugreift.

## Claims

1. Method for transmitting data between a control unit (SG) for restraint devices and sensors (S1,..., S5) which are connected thereto via a bus line (BL) in order to sense accident-specific vehicle parameters, each sensor (S1,..., S5) being assigned an address (a3, ..., a0) via which it can be identified by the control unit (SG), and each sensor (S1, ..., S5) transmitting, in a predefined timeslot (ZS0, ..., ZS4), its data to the control unit (SG) via the bus line (BL), **characterized in that** the control unit (SG) outputs a request telegram (A3, ..., A0) to the sensors (S1, ..., S5), and **in that** each sensor (S1, ..., S5) determines, from the comparison of the request telegram (A3, ..., A0) with its own address (a3, ..., a0), whether, and in which timeslot, (ZS0,...,ZS4), it is intended to transmit its data to the control unit (SG).

2. Method according to Claim 1, **characterized in that** for the sensors (S1, ..., S5) it becomes apparent, from the correspondence between at least part of its address, composed of a plurality of bits (a3, ... a0), with at least part of the request telegram, composed of a plurality of bits (A3, ..., A0), whether the respective sensor (S1, ..., S5) is to continuously output its data in a fixed time pattern (ZS0, ..., ZS4), or whether it is to output its data once in a timeslot (ZS0, ..., ZS4) which is **characterized by** the request telegram

3. Method according to Claim 2, **characterized in that**, using a request telegram (A3, ..., A0), part of which corresponds to part of the addresses (a3, ..., a0) of a plurality of sensors (S1, ..., S5), timeslots (ZS0, ..., ZS4) are assigned to this plurality of sensors.

4. Method according to one of the preceding claims, **characterized in that** sensors (S1, ..., S5) whose registered measured values are to be processed by the control unit (SG) with as short a time delay as possible, transmit their data in timeslots (ZS0, ZS1) which lie at the end of the timeslot sequence (ZS0, ..., ZS4).

5. Method according to Claim 1, **characterized in that** the control unit (SG) transmits, together with the request telegram (A3, ..., A0), a plurality of check bits over the bus line (BL), which check bits inform the sensors (S1, ..., S5) addressed by the request telegram (A3, ..., A0) that they are either to select a specific storage register from a plurality of storage registers present in them so that an information item can be written into it or read out of it, or that information is to be written into the selected storage register, or that an information item is to be read out of the selected storage register, or that measured data is to be transmitted to the control unit (SG).

6. The method as claimed in one of the preceding claims, **characterized in that** sensors (S1, ..., S5) exchange information with one another **in that** each sensor from among the sensors (S1, ..., S5) which communicate with one another accesses the timeslot or timeslots (ZS1, ..., ZS4), associated with the other sensor or sensors, in the data frame.

## Revendications

1. Procédé de transmission de données entre un appareil de commande (SG) de dispositifs de retenue et des capteurs (S1, ..., S5) reliés à celui-ci à l'aide d'une ligne de bus (BL) pour détecter des paramètres d'un véhicule spécifiques à un accident, avec associée à chaque capteur (S1, ..., S5) une adresse (a3, ..., a0) permettant à l'appareil de commande (SG) d'identifier celui-ci, et chaque capteur (S1, ..., S5) transmettant ses données par la ligne de bus (BL) à l'appareil de commande (SG) dans un créneau temporel (ZS0, ..., ZS4),
**caractérisé en ce que**
l'appareil de commande (SG) émet un télégramme de requête (A3, ..., A0) vers les capteurs (S1 ..., S5), et chaque capteur (S1, ..., S5) déduit de la comparaison du télégramme de requête (A3, ..., A0) avec sa propre adresse (a3, ..., a0), si et dans quel créneau temporel (ZS0, ..., ZS4) il doit transmettre ses données à l'appareil de commande (SG).

2. Procédé selon la revendication 1,
**caractérisé en ce que**
pour les capteurs (S1, ..., S5) il résulte de la concordance d'au moins une partie de son adresse comportant plusieurs bits (a3, ..., a0) avec au moins une partie du télégramme de requête comprenant plusieurs bits (A3, ..., A0), soit que le capteur concerné (S1, ..., S5) doit émettre ses données en permanence dans un créneau temporel (ZS0, ..., ZS4) fixe, soit qu'il doit émettre ses données une seule fois dans un créneau temporel (ZS0, ..., ZS4) **caractérisé par** le télégramme de requête.

3. Procédé selon la revendication 2,
**caractérisé en ce que**
par un télégramme de requête (A3, ..., A0), dont une partie concorde avec une partie des adresses (a3, ..., a0) de plusieurs capteurs (S1, ..., S5), des créneaux temporels (ZS0, ..., ZS4) sont associés à ces derniers.

4. Procédé selon l'une quelconque des revendications précédentes,
**caractérisé en ce que**
les capteurs (S1, ..., S5), dont les valeurs mesurées enregistrées doivent être traitées par l'appareil de commande (SG) avec un délai le plus petit possible, transmettent leurs données dans des créneaux temporels (ZS0, ZS1) qui se situent à la fin de la séquence des créneaux temporels (ZS0, ..., ZS4).

5. Procédé selon la revendication 1,
**caractérisé en ce que**
l'appareil de commande (SG) transmet, conjointement avec le télégramme de requête (A3, ..., A0), plusieurs bits de contrôle par la ligne de bus (BL), qui indiquent aux capteurs (S1, ..., S5) concernés par les télégrammes de requête (A3, ..., A0), soit qu'ils doivent sélectionner un registre de mémorisation déterminé parmi la pluralité qu'ils contiennent, pour écrire ou lire une information dans celui-ci, soit que des informations doivent être écrites dans le registre de mémorisation sélectionné ou qu'une information doit être lue à partir du registre de mémorisation sélectionné, soit que des données mesurées doivent être envoyées à l'appareil de commande (SG).

6. Procédé selon l'une quelconque des revendications précédentes,
**caractérisé en ce que**
les capteurs (S1, ..., S5) échangent des informations entre eux, les capteurs (S1, ..., S5) communiquant entre eux accédant chacun au(x) créneau(x) temporel(s) appartenant à l'autre (aux autres) capteur(s) dans le cadre de données.
